# EUROPEAN PATENT SPECIFICATION

(11) **EP 0 675 855 B1**
(45) Date of publication and mention of the grant of the patent: **24.03.1999**
(21) Application number: 94903218.9
(22) Date of filing: 21.12.1993
(51) Int. Cl.: C02F 1/46, B01D 17/06

(54) **APPARATUS FOR PURIFYING WATER**
VORRICHTUNG ZUR WASSERREINIGUNG
APPAREIL DE PURIFICATION D'EAU

(30) Priority: 22.12.1992 SE 9203860
(43) Date of publication of application: 11.10.1995
(73) Proprietor: SUNDELL, Jan, S-671 91 Arvika (SE)
(72) Inventor: SUNDELL, Jan, S-671 91 Arvika (SE)
(74) Representative: Lundquist, Lars-Olof
(86) International application number: SE9301097
(87) International publication number: WO9414709

(56) References cited:
- EP-A- 0 341 614
- EP-A- 0 341 614
- US-A- 3 944 478
- PATENT ABSTRACTS OF JAPAN, Vol. 16, No. 110, C-920; & JP,A,03 285 093 (MITSUBISHI MATERIALS CORP), 16 December 1991 (16.12.91).

## Description

The present invention relates to apparatus for electrolytic purification of polluted water, comprising an anode in the form of an upright, straight, circular cylinder the lower end surface of which forming a sacrificial surface; a cathode in the form of a plate arranged stationarily beneath the cylinder and having a horizontal, flat upper side; spacers to keep the cylinder a predetermined short distance from the plate in order to produce a gap-formed space between the sacrificial surface and the upper side of the plate; suspension means to allow movable suspension of the cylinder and thus axial lowering of the cylinder as it is consumed while maintaining the predetermined gap space; a source of electricity with automatic control equipment for direct current and with current connections to the cylinder and the plate; and supply means for supplying the polluted liquid into the gap space at a point distanced from the outer surface of the cylinder so that the liquid flows towards the periphery of the gap space.

A known problem with apparatus of the type described above is that the sacrificial surface of the anode becomes coated with impurities and oxidation products during the electrolysis, which results in reduced capacity or poorer purification effect. EP-0 341 614 and US-3,944,478 discuss this problem and propose mechanical cleaning devices in order to remove the deposits. The proposed mechanical cleaning devices are not, however, entirely satisfactory for removing the deposit from the sacrificial surface and the water leaving will therefore not be purified to the desired extent while maintaining the desired capacity, and interruptions will occur in order to replace the anode and/or to clean the sacrificial surface by some other mechanical means. The proposed cleaning devices also complicate the construction of the apparatus.

The object of the present invention is to provide an apparatus for purifying polluted water which will enable efficient cleaning of the sacrificial surface so that the water leaving has the desired high purity at high capacity, and which is so efficient that not only current but even future environmental requirements are fulfilled, particularly for vehicle-care installations which discharge large quantities of waste water containing mineral oil, mechanical works discharging cutting oils, and machine rooms where oil leakage occurs and is removed by rinsing with water.

The apparatus according to the invention is substantially characterized in that said cylinder is journalled rotatably in said suspension means and that the apparatus comprises drive means to rotate the cylinder and means to supply liquid under high pressure to flush the sacrificial surface clean.

The invention will be explained in more detail in the following, with reference to the accompanying drawings.

Figure 1 is a side view of an apparatus for electrolytic purification of polluted water provided with an electrolysis equipment in accordance with a first embodiment of the invention, one side of the apparatus housing having been removed.

Figure 2 is a side view of the electrolysis equipment included in the apparatus according to Figure 1.

Figure 3 is a sectional view of the electrolysis equipment according to Figure 2.

Figure 4 is a side view of an electrolysis equipment according to a second embodiment of the invention.

Figure 5 is a sectional view of the electrolysis equipment according to Figure 4.

The apparatus according to the invention constitutes an electrolytic water purifier for waste water containing primarily mineral oil and COD-contaminants. However, the apparatus can of course be used for other types of polluted water, such as water containing heavy metals.

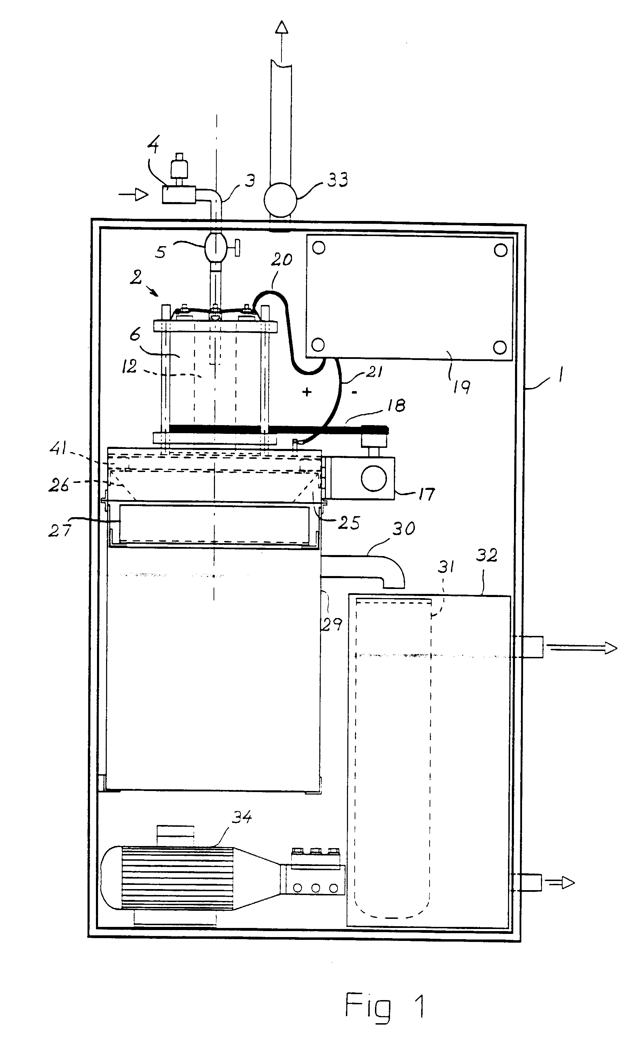

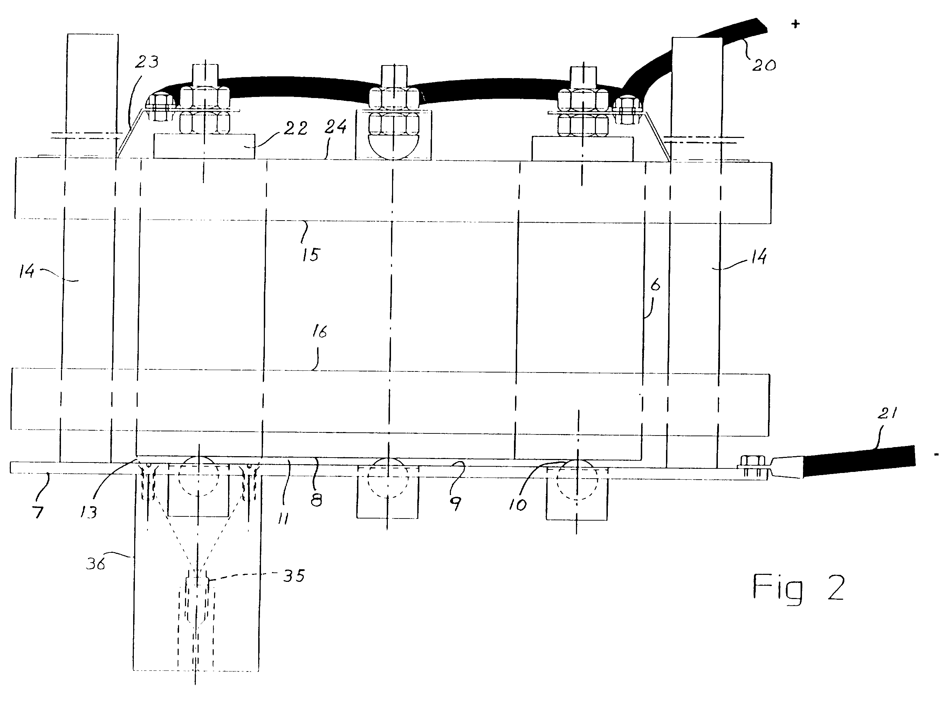

Figure 1 shows schematically an apparatus for electrolytic purification of polluted water, comprising a housing 1 enclosing an electrolysis equipment 2 according to a first embodiment of the invention. Polluted water is pumped from a storage tank (not shown) by a pump (not shown) to the electrolysis equipment 2 through a pipe 3 provided with an electric straight-seat valve or magnetic valve 4 and a control valve 5. The electrolysis equipment of the apparatus comprises an upper anode 6 of aluminium and a lower cathode 7 of stainless steel material. The anode is in the form of an upright, straight, circular cylinder the lower end surface 8 of which forming a sacrificial surface, while the cathode 7 is in the form of a plate arranged stationarily beneath the cylinder 6 and having a horizontal, flat upper side 9. Spacers 10 in the form of a plurality of stainless steel ball bearings (see Figure 2) are arranged in the plate 7 to keep the cylinder 6 a predetermined short distance from the plate 7 in order to produce a gap-formed space 11 between the sacrificial surface 8 and the upper side 9 of the plate 7. Each ball bearing 10 is arranged in a bearing housing 39 consisting of electrically insulating material. In the embodiment shown in Figures 1-3 the cylinder 6 has a central axial opening, suitably in the form of a through-hole so that the cylinder 6 is open at both ends. In this case the mouth of the supply pipe 3 is in the opening 12 so that the waste water flows down through the hole 12 and is forced through the gap space 11 at all points around its circumference, passing through the peripheral opening 13 between the cylinder 6 and plate 7 and is collected on the radially outwardly extended part of the plate 7.

The apparatus also comprises suspension means to allow movable suspension of the cylinder 6 and thus axial lowering of the cylinder 6 as it is consumed, keeping pace with its decrease in volume so that the predetermined gap space 11 remains constant. The cylinder 6 thus rests throughout on the ball bearings 10 and is supported by them. Its suspension means comprise vertical stainless steel guides 14 and upper and lower, insulated bearing plates 15, 16 of a suitable material, e.g. "supralen" or other plastic material, mounted horizontally on the guides 14, the upper bearing plate 15 being slidingly connected to the guides 14 while the lower bearing plate 16 is rigidly connected thereto. The cylindrical aluminium anode 6 is received in circular holes in the bearing plates 15, 16 and is slidingly journalled in these holes to permit rotary movement in both the bearing plates 15, 16, as well as axial movement during operation through the lower bearing plate 16. According to the invention, therefore, the cylinder 6 is rotatably journalled in the suspension means 14, 15, and for this purpose the apparatus includes drive means to rotate the cylinder 6 in either direction without any restriction. The drive means comprises a motor 17 which drives the cylinder 6 via a gear and transmission belt 18 (shown only in Figure 1), the horizontal belt surrounding the cylinder 6 and being in friction contact therewith.

The apparatus is provided with a source of electricity 19 with automatic control equipment for direct current and with current connections including plus and minus leads 20, 21 to the cylinder 6 and plate 7, respectively, and four sliding contacts 22 mounted on the upper bearing plate 15 by means of stainless steel spring holders 23 to lie in sliding contact with the upper side 24 of the rotating cylinder 6.

The plate 7 rests on a stand 25 via an insulator 41, the motor 17 also being mounted on this stand.

The vertical dimension of the gap space 11, i.e. the distance between the sacrificial surface 8 of the cylinder and the upper side 9 of the plate 7 is suitably between 2.5 and 3.5 mm, preferably 3 mm. When the waste water passes through the gap space 11 it is subjected to a pulsating direct current of about 250 Amp. Aluminium is oxidized at the sacrificial surface of the cylinder and the aluminium ions in solution form aluminium salts and complexes from the impurities in the waste water and these aluminium ions and complexes in turn bind other substances present in the waste water, e.g. mineral oil, etc. The treated waste water is then allowed to flow over the edges of the plate, down into a collection funnel 26 and on to a stainless steel coarse filter box 27 with a fabric filter to catch the precipitated waste products while purified water is carried away via a buffer tank 29 and overflow pipe 30 to a fabric filter 31 and then via a clean-water tank to a drain or to a buffer tank for re-use. The apparatus housing is ventilated by means of a fan 33.

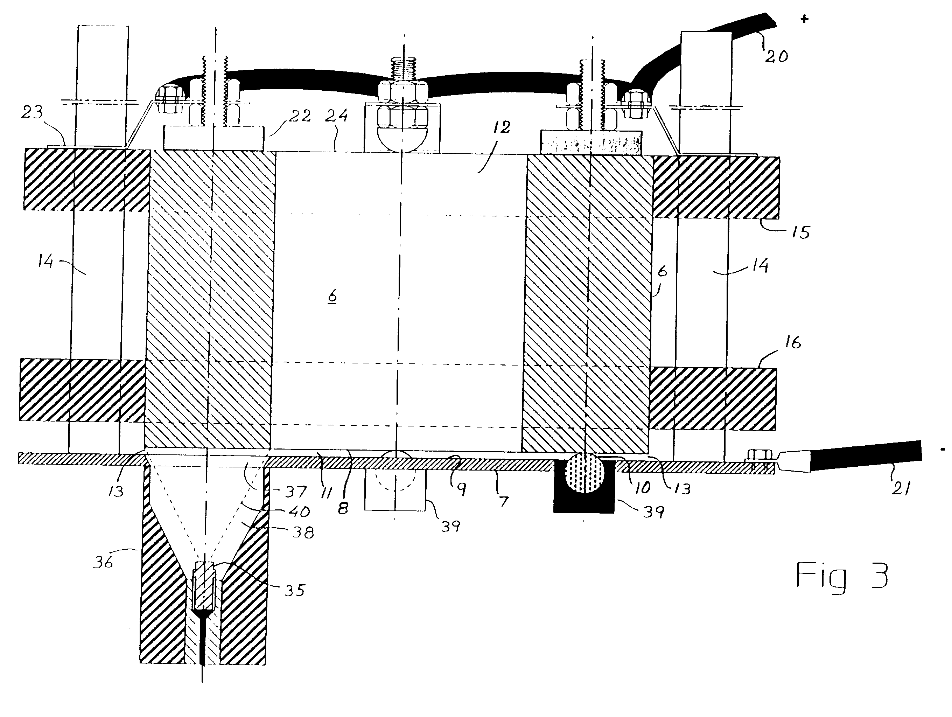

The sacrificial surface 8 of the cylinder 6 must be cleaned and for this purpose the apparatus according to the invention includes means for supplying liquid under high pressure, suitably 160 bar or above, in the direction of the sacrificial surface 8 to flush it clean from impurities. The liquid-supply means shown include a high-pressure pump 34 which pumps liquid from the buffer tank 29 to a high-pressure nozzle 35 (see Figures 2 and 3), suitably of the cutting type, i.e. it supplies a liquid jet 40 which in one dimension is extremely narrow and thus produces a cutting effect similar to the edge of a knife at the impact surface. The high-pressure nozzle 35 is arranged in a holder 36 mounted on the lower side of the plate 7, the plate 7 being provided in the area of the holder 36 with an elongated opening 37 (see Figure 3), through which the diverging jet 40 of high-pressure liquid passes from a diverging space 38 in the holder 36 and encounters the sacrificial surface 8 with a radial extension that covers the entire radial dimension of the sacrifical surface. To achieve optimal cleaning effect, the supply of waste water to the gap space 11 is preferably discontinued when high-pressure flushing is in progress. The waste water can then be recirculated after the sacrificial surface has been cleaned. The apparatus suitably includes a measuring and control device (not shown) to measure the potential between anode and cathode. When the potential exceeds a predetermined value, the measuring and control device emits a signal to cut off the supply of waste water to the gap space 11 and, at the same time, a signal to start the high-pressure pump 34 and thus the high-pressure flushing while the cylinder 6 is still rotating.

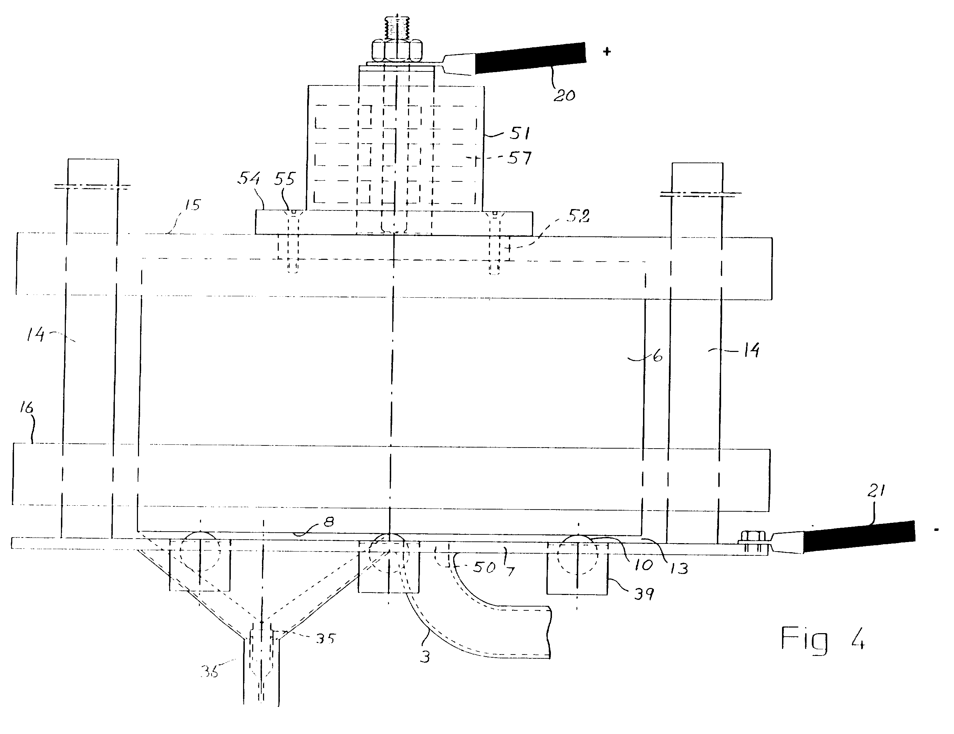

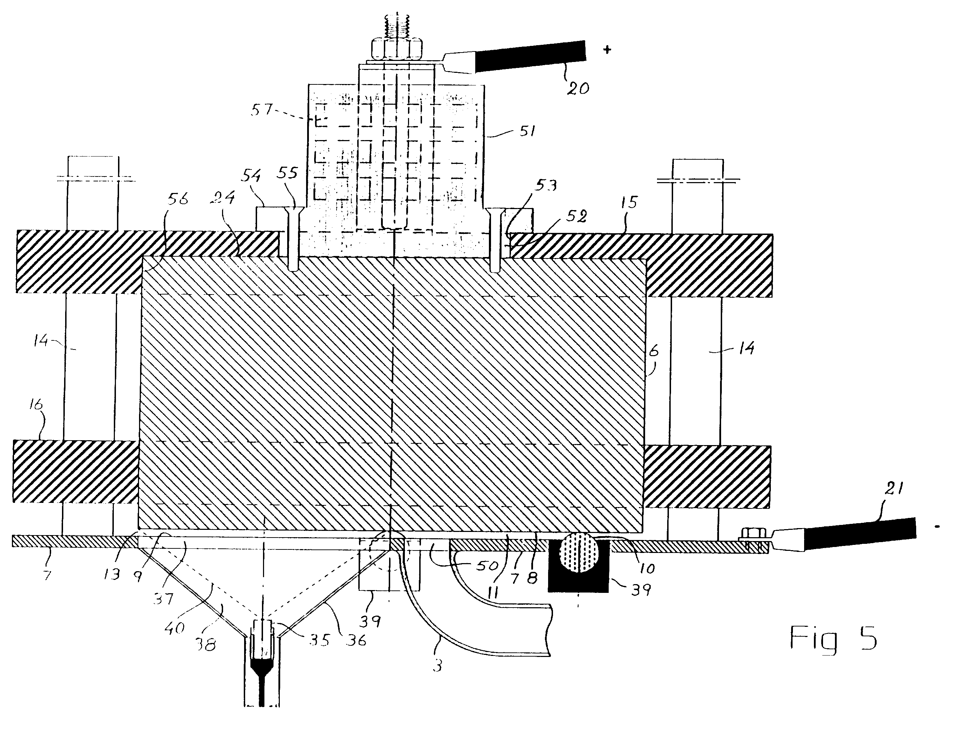

Figures 4 and 5 show another embodiment of the electrolysis equipment in which the cylinder 6 is homogenous right through, i.e. solid, so that the sacrificial surface 8 is an area of a circle instead of a ring as in the embodiment described first. This gives the apparatus considerably increased capacity. The polluted water is supplied into the gap space 11 through a round opening 50 in the plate 7 (see Figure 5), the pipe 3 extending beneath the plate 7 and being secured thereto near the opening 50. The whole sacrificial surface 8 must be utilized for the electrolysis as otherwise areas will appear where the anode 6 has not been consumed and the sacrificial surface will become uneven. The polluted water is therefore supplied eccentrically in relation to the circular sacrificial surface 8, the opening 50 therefore being located eccentrically a short distance from the centre line of the cylinder, suitably 2-10 mm. In this embodiment the current connection to the anode 6 also comprises a connecting body 51 of an electrically conducting material with a lower cylindrical part 52 for receipt in a central, circular opening 53 in the upper bearing plate 15. The connecting body 51 has a flange 54 freely resting against the upper side of the bearing plate 15. The connecting body 51 is screwed to the anode 6 by screws 55 and, by means of its flange 54 and lower part 52, is in sliding contact with the upper bearing plate 15. The latter is also provided with a concentric opening 56 for receipt of the upper end part of the anode 6, this end part thus also being in sliding contact with the upper bearing plate 15 so that the anode 6 and connecting body 51 can rotate as a unit in the bearing plates 15, 16. The current is transmitted from the lead 20 to the connecting body 51 via a set of sliding contacts 57 mounted beside the connecting body 51 in spring contact therewith. The high-pressure nozzle is arranged to produce a high-pressure jet which is spread so that the sacrificial surface 8 is treated from the centre out towards the periphery. The embodiment according to Figures 4 and 5 is preferred over the embodiment described first, because the anode 6 gives a larger and maximal sacrificial surface 8, and also because the extra connecting body 51 with its sliding contacts 57 and anode 6 and the upper bearing plate 15 can move axially downwards along the guides as a unit (the anode 6 and connecting body 51 at the same time rotating in the bearing plates 15, 16).

The aluminium anode 6 is consumed during operation and when the upper bearing plate 15 has reached the vicinity of the lower bearing plate 16, the remnants of the aluminium anode 6 are removed and a new, fullheight anode inserted.

Rotating the cylinder 6 results in an extremely high degree of precipitation efficiency. The apparatus requires a minimum of maintenance and is very simple to install on existing equipment such as vehicle-care installations. The purification enables a closed system to be used for the installations, e.g. for a carwash machine. Energy consumption is low and very little hydrogen gas is formed during the electrolysis.

Continuous rotation of the cylinder 6 ensures that it will be consumed more uniformly over the entire sacrificial surface 8 than if the cylinder were kept still. This is probably explained by the fact that the current paths through the liquid between anode 6 and cathode 7 continually alter their relative contact points on the electrode surfaces 8, 9 since the sacrificial surface 8 rotates about its centre while the cathode 7 is stationary. In an experiment waste water containing 0.35 g oil/lit. from a vehicle-care installation was purified using an apparatus as illustrated in Figure 1, the cylinder 6 being rotated at a speed of 12 rpm and clean water was obtained with a capacity of 1000 lit./hour. The current strength was 250 Amp. The cylinder 6 was consumed uniformly across the whole sacrificial surface 8. When the current strength fell to a predetermined lowest value, indicating a coating of deposits on the sacrificial surface 8, the supply of waste water was shut down and the high-pressure pump 34 was started to supply liquid at a pressure of 160 bar to the nozzle 35 which directed a powerful liquid jet 40 against the sacrificial surface 8 so that the coating was cut off. This high-pressure flushing lasted for 8 seconds so that the cylinder 6 had time to rotate one good revolution, which was sufficient to remove the coating and increase the current strength to the desired operating level. During flushing and for a little while after the waste water was again being supplied to the gap space 11, the waste water was suitably recirculated to the storage tank.

If desired, the single high-pressure nozzle may be replaced by two or more high-pressure nozzles, the liquid jets treating different parts of the sacrificial surface in a radially overlapping relationship. In the embodiments according to Figures 4 and 5 the opening 50 may be circular or elongated and arc-shaped. It may also be replaced by two or more openings having small holes located in the vicinity of, but still a short distance from the centre line (axis of rotation) of the cylinder 6.

Depending on the type of waste water, the electrolytically purified water may be subjected to other purification processes, e.g. osmosis, in order to remove salts and other substances that cannot be caught by means of electrolysis.

## Claims

1. Apparatus for electrolytic purification of polluted water, comprising an anode in the form of an upright straight, circular cylinder (6) the lower end surface of which forming a sacrificial surface (8); a cathode in the form of a plate (7) arranged stationarily beneath the cylinder (6) and having a horizontal, flat upper side; spacers (10) to keep the cylinder (6) a predetermined short distance from the plate (7) in order to produce a gap-formed space (11) between the sacrificial surface (8) and the upper side (9) of the plate (7); suspension means (14, 15, 16) to allow movable suspension of the cylinder (6) and thus axial lowering of the cylinder as it is consumed while maintaining the predetermined gap space (11); a source of electricity (19) with automatic control equipment for direct current and with current connections (20, 21, 22, 51, 57) to the cylinder and the plate; and supply means (3) for supplying the polluted liquid into the gap space (11) at a point distanced from the outer surface of the cylinder (6) so that the liquid flows towards the periphery of the gap space (11),
characterized in that the cylinder (6) is journalled rotatably in said suspension means (14, 15, 16) and that the apparatus comprises drive means (17, 18) to rotate the cylinder (6) and means (34, 35) to supply liquid under high pressure to flush the sacrificial surface (8) clean.

2. Apparatus as claimed in claim 1, characterized in that said distance between anode and cathode is 2.5-3.5 mm, preferably 3 mm.

3. Apparatus as claimed in claim 1 or 2, characterized in that the liquid supply means (3) includes at least one high-pressure nozzle (35), preferably of the cutting type.

4. Apparatus as claimed in any of claims 1-3, characterized in that said spacers includes ball bearings (10) mounted in the plate (7) and carrying the cylinder (6) to permit its rotation, the ball bearings (10) being arranged in bearing housings (39) of electrically insulating material.

5. Apparatus as claimed in any of claims 1-4, characterized in that the cylinder (6) includes an aluminium material which, through electrolysis from the sacrificial surface (8) emits aluminium ions to the liquid passing through the gap space (11).

6. Apparatus as claimed in any of claims 1-5, characterized in that the cylinder (6) has a central opening (12) running through it, into which a pipe (3) of said supply means opens, the sacrificial surface (8) having annular shape.

7. Apparatus as claimed in any of claims 1-5, characterized in that the cylinder (6) is solid, in which case the sacrificial surface (8) has circle area form, and that the plate (7) is provided with at least one eccentric opening (50) to which said supply means (3) is connected.

8. Apparatus as claimed in any of claims 1-7, characterized in that said suspension means includes a plurality of vertical guides (14) resting on the plate (7), and upper and lower bearing plates (15, 16) with circular apertures to freely receive the cylinder (6) for its rotation in relation to the bearing plates (15, 16), the lower bearing plate (16) being rigidly connected to the guides (14) and the upper bearing plate (15) being slidingly connected to the guides (14) to be lowered as the cylinder (6) is consumed and simultaneously with the cylinder (6).

9. Apparatus as claimed in claim 6 or 7 in combination with claim 8, characterized in that said current connections include a straight, circular connecting body (51) arranged concentrically and secured to the upper side (24) of the cylinder (6) and extending through a concentric opening (53) in the upper bearing plate (15), and also having a flange (54) or similar radial protrusion for cooperation with the upper bearing plate (15) ensuring that it accompanies the cylinder (6) and connecting body (51) as they move axially downwards during operation.

10. Apparatus as claimed in claim 7, characterized in that said eccentric opening (50) has circular or elongated, preferably arc-shaped, cross section and that the inner edge of the opening (50) is situated at a distance of 2-10 mm from the centre line of the cylinder (6).

## Patentansprüche

1. Vorrichtung zur elektrolytischen Reinigung von verunreinigtem Wasser
- mit einer Anode in Form eines senkrechten geraden kreisförmigen Zylinders (6), dessen untere Stirnfläche eine Opferoberfläche (8) bildet,
- mit einer Kathode in Form einer Platte (7), die ortsfest unter dem Zylinder (6) angeordnet ist und eine horizontale, ebene Oberseite hat,
- mit Distanzelementen (10) zum Halten des Zylinders (6) in einem vorgegebenen kurzen Abstand von der Platte (7), um einen spaltförmigen Zwischenraum (11) zwischen der Opferoberfläche (8) und der Oberseite (9) der Platte (7) zu erzeugen,
- mit einer Aufhängungseinrichtung (14, 15, 16), um eine bewegliche Aufhängung des Zylinders (6) und somit ein axiales Absenken des Zylinders zu ermöglichen, wenn er verbraucht wird, während der vorgegebene Zwischenraum (11) beibehalten wird,
- mit einer Stromquelle (19) mit automatischem Steuergerät für Gleichstrom und mit Stromanschlüssen (20, 21, 22, 51, 57) an den Zylinder und die Platte und
- mit einer Zuführeinrichtung (3) zum Zuführen von verunreinigter Flüssigkeit in den Zwischenraum (11) an einer Stelle im Abstand von der äußeren Oberfläche des Zylinders (6), so daß die Flüssigkeit zu dem Umfang des Zwischenraums (11) strömt,
dadurch gekennzeichnet,
- daß der Zylinder (6) in der Aufhängungseinrichtung (14, 15, 16) drehbar gelagert ist und
- daß die Vorrichtung eine Antriebseinrichtung (17, 18) zum Drehen des Zylinders (6) sowie eine Einrichtung (34, 35) zum Zuführen von Flüssigkeit unter hohem Druck zum Sauberspülen der Opferoberfläche (8) aufweist.

2. Vorrichtung nach Anspruch 1, dadurch gekennzeichnet, daß der Abstand zwischen Anode und Kathode 2,5 bis 3,5 mm, vorzugsweise 3 mm beträgt.

3. Vorrichtung nach Anspruch 1 oder 2, dadurch gekennzeichnet, daß die Flüssigkeitszuführeinrichtung (3) wenigstens eine Hochdruckdüse (35), vorzugsweise der schneidenden Art, aufweist.

4. Vorrichtung nach einem der Ansprüche 1 bis 3, dadurch gekennzeichnet, daß die Distanzelemente Kugellager (10) aufweisen, die in der Platte (7) angeordnet sind und den Zylinder (6) tragen, um seine Drehung zu ermöglichen, wobei die Kugellager (10) in Lagergehäusen (39) aus elektrisch isolierendem Material angeordnet sind.

5. Vorrichtung nach einem der Ansprüche 1 bis 4, dadurch gekennzeichnet, daß der Zylinder (6) ein Aluminiummaterial aufweist, das durch Elektrolyse von der Opferoberfläche (8) Aluminiumionen zu der Flüssigkeit emittiert, die durch den Zwischenraum (11) hindurchgeht.

6. Vorrichtung nach einem der Ansprüche 1 bis 5, dadurch gekennzeichnet, daß der Zylinder (6) eine zentrale durch ihn hindurchgehende Öffnung (12) hat, in welcher ein Rohr (3) der Zuführeinrichtung mündet, wobei die Opferoberfläche (8) eine Ringform hat.

7. Vorrichtung nach einem der Ansprüche 1 bis 5, dadurch gekennzeichnet, daß der Zylinder (6) massiv ist und, wobei die Opferoberfläche (8) in diesem Fall eine Kreisflächenform hat, daß die Platte (7) mit wenigstens einer exzentrischen Öffnung (50) versehen ist, mit welcher die Zuführeinrichtung (3) verbunden sind.

8. Vorrichtung nach einem der Ansprüche 1 bis 7, dadurch gekennzeichnet, daß die Aufhängungseinrichtung eine Vielzahl von auf der Platte (7) ruhenden vertikalen Führungen (14) und obere und untere Lagerplatten (15, 16) mit kreisförmigen Öffnungen aufweist, um den Zylinder (6) für seine Drehung bezüglich der Lagerplatten (15, 16) frei aufzunehmen, wobei die untere Lagerplatte (16) mit den Führungen (14) starr und die obere Lagerplatte (15) mit den Führungen (14) gleitend verschiebbar verbunden ist, um sie beim Verbrauch des Zylinders (6) und gleichzeitig zum Zylinder (6) abzusenken.

9. Vorrichtung nach Anspruch 6 oder 7 in Kombination mit Anspruch 8, dadurch gekennzeichnet, daß die Stromanschlüsse einen geraden, kreisförmigen Verbindungskörper (51) aufweisen, der konzentrisch zu der Oberseite (24) des Zylinders (6) angeordnet und daran befestigt ist und sich durch eine konzentrische Öffnung (53) in der oberen Lagerplatte (15) erstreckt sowie auch einen Flansch (54) oder einen ähnlichen radialen Vorsprung für ein Zusammenwirken mit der oberen Lagerplatte (15) hat, um zu gewährleisten, daß er den Zylinder (6) und den Verbindungskörper (51) begleitet, wenn sie sich axial nach unten während des Betriebs bewegen.

10. Vorrichtung nach Anspruch 7, dadurch gekennzeichnet, daß die exzentrische Öffnung (50) einen kreisförmigen oder länglichen, vorzugsweise bogenförmigen Querschnitt hat und daß der innere Rand der Öffnung (50) in einem Abstand von 2 bis 10 mm von der Mittellinie des Zylinders (6) gelegen ist.

## Revendications

1. Appareil destiné à une purification électrolytique de l'eau polluée, comprenant une anode sous la forme d'un cylindre circulaire (6), rectiligne en position dressée, dont la surface d'extrémité inférieure forme une surface sacrificielle (8) ; une cathode sous la forme d'une plaque (7) agencée de manière fixe au-dessous du cylindre (6) et ayant un côté supérieur horizontal et plat ; des entretoises (10) pour garder le cylindre (6) à une courte distance prédéterminée de la plaque (7) afin de créer un espace formant entrefer (11) entre la surface sacrificielle (8) et le côté supérieur (9) de la plaque (7) ; des moyens de suspension (14, 15, 16) pour permettre la suspension mobile du cylindre (6) et ainsi l'abaissement axial du cylindre lorsqu'il est consumé tout en maintenant l'espacement d'entrefer prédéterminé (11) ; une source d'électricité (19) munie d'un équipement de commande automatique pour courant continu et avec des connexions de courant (20, 21, 22, 51, 57) au cylindre et à la plaque ; et des moyens d'alimentation (3) pour amener du liquide pollué dans l'espacement d'entrefer (11) à un point à distance de la surface extérieure du cylindre (6) de sorte que le liquide s'écoule vers la périphérie de l'espacement d'entrefer (11), caractérisé en ce que le cylindre (6) est tourillonné de manière rotative dans lesdits moyens de suspension (14, 15 16) et en ce que l'appareil comprend des moyens d'entraînement (17, 18) pour faire tourner le cylindre (6) et des moyens (34, 35) pour appliquer du liquide à haute pression pour laver la surface sacrificielle (8).

2. Appareil selon la revendication 1, caractérisé en ce que ladite distance entre l'anode et la cathode est de 2,5 à 3,5 mm, de préférence 3 mm.

3. Appareil selon la revendication 1 ou la revendication 2, caractérisé en ce que les moyens d'amenée de liquide (3) comprennent au moins une buse à haute pression (35), de préférence du type coupant.

4. Appareil selon l'une quelconque des revendications 1 à 3, caractérisé en ce que lesdites entretoises comprennent des roulements à billes (10) montés dans la plaque (7) et supportant le cylindre (6) pour permettre sa rotation, les roulements à billes (10) étant agencés dans les logements de roulement (39) du matériau électriquement isolant.

5. Appareil selon l'une quelconque des revendications 1 à 4, caractérisé en ce que le cylindre (6) comprend de l'aluminium qui, grâce à l'électrolyse provenant de la surface sacrificielle (8), émet des ions aluminium dans le liquide traversant l'espacement d'entrefer (11).

6. Appareil selon l'une quelconque des revendications 1 à 5, caractérisé en ce que le cylindre (6) comporte une ouverture centrale (12) le traversant, dans laquelle débouche un tuyau (3) desdits moyens d'amenée, la surface sacrificielle (8) ayant une forme annulaire.

7. Appareil selon l'une quelconque des revendications 1 à 5, caractérisé en ce que le cylindre (6) est plein, auquel cas la surface sacrificielle (8) a une forme circulaire, et en ce que la plaque (7) est munie d'au moins une ouverture excentrique (50) à laquelle sont connectés lesdits moyens d'amenée (3).

8. Appareil selon l'une quelconque des revendications 1 à 7, caractérisé en ce que lesdits moyens de suspension comprennent une pluralité de guides verticaux (14) reposant sur la plaque (7), et les plaques de support supérieure et inférieure (15, 16) comportant des ouvertures circulaires pour recevoir librement le cylindre (6) pour qu'il puisse tourner par rapport aux plaques de support (15, 16), la plaque de support inférieure (16) étant connectée de manière rigide aux guides (14) et la plaque de support supérieure (15) étant connectée de manière coulissante aux guides (14) à abaisser lorsque le cylindre (6) est consumé et en même temps que le cylindre (6).

9. Appareil selon la revendication 6 ou la revendication 7, en combinaison avec la revendication 8, caractérisé en ce que lesdites connexions de courant comprennent un corps de connexion (51) circulaire et droit agencé concentriquement et fixé sur le côté supérieur (24) du cylindre (6) et traversant une ouverture concentrique (53) dans la plaque de support supérieure (15) et ayant également une bride (54) ou autre saillie radiale similaire pour coopérer avec la plaque de support supérieure assurant qu'elle accompagne le cylindre (6) et le corps de connexion (51) lorsqu'ils se déplacent axialement vers le bas pendant le fonctionnement.

10. Appareil selon la revendication 7, caractérisé en ce que ladite ouverture excentrique (50) a une coupe transversale circulaire ou allongée, de préférence en forme d'arc, et en ce que le bord intérieur de l'ouverture (50) est placé à une distance comprise entre 2 et 10 mm de la ligne centrale du cylindre (6).
